**Europäisches Patentamt**

**European Patent Office**

**Office européen des brevets**

(19)

(11) Veröffentlichungsnummer: **0 473 035 A2**

(12) # EUROPÄISCHE PATENTANMELDUNG

(21) Anmeldenummer: **91113818.8**

(22) Anmeldetag: **17.08.91**

(51) Int. Cl.5: **B23B 51/04**

(30) Priorität: **29.08.90 DE 4027287**
**27.07.91 DE 4125005**
**27.07.91 DE 4125006**

(43) Veröffentlichungstag der Anmeldung:
**04.03.92 Patentblatt 92/10**

(84) Benannte Vertragsstaaten:
**AT BE CH DK ES FR GB GR IT LI LU NL SE**

(71) Anmelder: **KAISER GMBH. & CO. KG**
**Ramsloh 4**
**W-5885 Schalksmühle 1(DE)**

(72) Erfinder: **Köcher, Helmut, Dipl.-Ing.**
**Papenweg 22**
**W-3300 Braunschweig(DE)**
Erfinder: **Kopowski, Eckart, Dr.-Ing.**
**Altewiekring 11**
**W-3300 Braunschweig(DE)**

(74) Vertreter: **Buse, Karl Georg, Dipl.-Phys. et al**
**Patentanwälte Dipl.-Phys. Buse Dipl.-Phys.**
**Mentzel Dipl.-Ing. Ludewig Unterdörnen 114**
**W-5600 Wuppertal 2(DE)**

(54) **Vorrichtung zum Herstellen von Wandausnehmungen.**

(57) Die Vorrichtung zur Herstellung von Wandausnehmungen für den Einbau von Dosen für Elektroinstallationsgeräte, wie beispielsweise Hohlwanddosen, weist ein Zentrierglied auf und ein damit im Abstand angeordnetes, von einer motorischen Antriebseinrichtung betriebenes Arbeitswerkzeug. Zur Herstellung verschiedener Wandausnehmungen mit unterschiedlichen Durchmessern ist der Abstand zwischen dem Zentrierglied und dem an einem Werkzeugträger gelagerten Arbeitswerkzeug einstellbar und in dieser Einstellage feststellbar, wobei das Arbeitswerkzeug aus einem neben einer Eigendrehung auch eine um das Zentrierglied herumführbare Bewegung ausführenden Fräser besteht.

FIG.5

Die Erfindung betrifft eine Vorrichtung zum Herstellen von Wandausnehmungen, insbesondere für den Einbau von Dosen für Elektroinstallationsgeräte, wie Hohlwanddosen, mit einem Zentrierglied und einem im Abstand dazu angeordneten, mit einer motorischen Antriebseinrichtung betriebenen Arbeitswerkzeug.

Aus der DE-OS 24 10 120 ist eine Vorrichtung zum Herstellen von Wandausnehmungen der eingangs genannten Art bekannt, bei der das Zentrierglied aus einem Spiralbohrer besteht, der an einer Halterung lösbar befestigt ist. Mit dieser Halterung ist in radialem Abstand zu dem das Zentrierglied bildenden Spiralbohrer ein Sägeblatt ringförmig fest verbunden. Dabei ist der Spiralbohrer derart an der Halterung festgelegt, daß er die Zahnebene des ringförmigen Sägeblattes nach unten hin überragt, so daß bei der Herstellung der Wandausnehmung zuvor bereits der der Zentrierung dienende Spiralbohrer etwas in die Wand eingedrungen ist. Das rückwärtige Schaftende des der Zentrierung dienenden Bohrers wird in eine Antriebsvorrichtung, wie beispielsweise eine Bohrmaschine eingespannt, wodurch die Ausschneidevorrichtung insgesamt angetrieben wird. Mit dieser vorbekannten Vorrichtung läßt sich jedoch immer nur eine Wandausnehmung gleichen Durchmessers herstellen, so daß für Wandausnehmungen mit davon abweichenden Durchmessern zumindest die Halterung mit dem daran befestigten kreisringförmigen Sägeblatt am das Zentrierglied bildenden Spiralbohrer auszuwechseln ist.

Die Aufgabe der vorliegenden Erfindung besteht darin, eine Vorrichtung der eingangs genannten Art zu schaffen, mit welcher es ohne Werkzeugwechsel möglich ist, Wandausnehmungen mit verschiedenen Durchmessern in einem vorgegebenen Durchmesserbereich bei stufenloser Durchmessereinstellung herzustellen.

Diese Aufgabe ist mit den im Kennzeichen des Patentanspruches 1 genannten Merkmalen gelöst. Dadurch ist es möglich, den radialen Abstand des Arbeitswerkzeuges zum Zentrierglied in einem Bereich zwischen einem Minimalabstand und einem Maximalabstand stufenlos einzustellen, so daß beim Herumführen des Arbeitswerkzeuges um das Zentrierglied eine Wandausnehmung mit dem eingestellten Radius entsprechendem Durchmesser entsteht, nachdem zuvor mit dem Arbeitswerkzeug eine der Tiefe der Ausnehmung entsprechende Bohrung erzeugt worden ist. Zur Abstandseinstellung des Arbeitswerkzeuges vom Zentrierglied einerseits und zur Erzeugung der Ausgangsbohrung für das Arbeitswerkzeug andererseits ist der Werkzeugträger vorteilhaft an einem Schlitten parallel zur Wand einstellbar gehaltert, und der Schlitten an einem an der Wand abstützbaren Ständer in Fräserlängsrichtung verschiebbar geführt. Dabei besteht der Ständer vorteilhaft aus wenigstens zwei einander diametral gegenüberliegenden Säulen, die mit ihrem Unterende an einem die größtmögliche Wandausnehmung umfassenden Positionierring gehaltert sind und in Führungen des Schlittens eingreifen, der eine Handhabe aufweist. Diese Handhabe dient einerseits der vertikalen Verschiebung des Schlittens und damit auch des Werkzeugträgers und des Arbeitswerkzeuges gegenüber den Säulen, während andererseits auch mit der Handhabe das Arbeitswerkzeug in Umfangsrichtung der zu erstellenden Wandausnehmung vorgeschoben werden kann.

Damit sich der Schlitten in bezug auf seine zur Wand senkrechte Bewegung selbsttätig in seine Ausgangslage zurückführen kann, ist nach einem weiteren Ausgestaltungsmerkmal der Erfindung zwischen Positionierring und Schlitten eine Rückstelleinrichtung für den Schlitten angeordnet. Diese Rückstelleinrichtung ist vorteilhaft aus die Säulen umfassenden Druckfedern gebildet, die einerends am Positionierring und andernends am Schlitten abgestützt sind. Zur gleichmäßigen Anlage des Positionierringes an der Wand während des Arbeitsvorganges ist der Positionierring an seiner der Wand zugekehrten Seite vorteilhaft mit einer Auflage, insbesondere aus Moosgummi, beschichtet.

Zur Festlegung des eingestellten Abstandes des Werkzeugträgers vom Zentrierglied ist dieser Werkzeugträger vorteilhaft mit wenigstens einer Spannschraube gegenüber dem Schlitten festlegbar. Dabei ist zur Auffindung des gewünschten Abstandes dem Schlitten vorteilhaft eine Skala zugeordnet, während am Werkzeugträger eine Markierung angeordnet ist, mit welcher an der Skala der dem eingestellten Abstand zwischen Zentrierglied und Fräser zugehörige Durchmesser der Wandausnehmung ablesbar ist. Zur erleichterten Auffindung der Einstellagen, die mit den gebräuchlichsten, normgemäßen Durchmessern der verwendeten Hohlwanddosen übereinstimmen, ist der in einer dem Schlitten zugeordneten Führung angeordnete Werkzeugträger vorteilhaft in diesen Einstellagen verrastbar.

Zur problemlosen Handhabung der Vorrichtung wird vorgeschlagen, die Handhabe aus zwei einander gegenüberliegenden Griffen am Schlitten zu bilden. Es ist allerdings auch möglich, die Handhabe aus einem den Schlitten abstandsweise umrundenden Griffring zu bilden, der über Speichen mit dem Schlitten verbunden ist. Zur Erleichterung der manuellen Kraftübertragung für den in Umfangsrichtung verlaufenden Vorschub des Fräsers ist der Griffring mit den Speichen vorteilhaft über ein Klinkengesperre verbunden, das in Vorschubrichtung des Fräsers den Griffring formschlüssig mit den Schlitten verbindet, während der Griffring entgegen der Vorschubrichtung des Fräsers gegenüber dem Schlitten frei rückdrehbar ist. Dies ist insofern vorteilhaft, als daß zur Erzeugung einer manuellen Drehbewegung um 360° nicht umgegriffen zu werden braucht. Das vorteilhaft aus einem angespitzten Stift gebildete Zentrierglied kann in allen Fällen, in denen der Vorschub des Arbeitswerkzeuges in Umfangsrichtung manuell erfolgt, an einer Diametralstrebe des Positionierringes festgelegt sein.

Einen von der manuellen Handhabung unabhängigen Vorschub in Umfangsrichtung der herzustellenden Wandausnehmung läßt sich bei einer vorteilhaften Ausführungsform der Erfindung dadurch erzielen, daß der Werkzeugträger mittels einem am Schlitten angeordneten Vorschubgetriebe in Umlauf um das Zentrierglied bringbar ist. In diesem Fall mag eine zentrale Ritzelwelle der am Schlitten gehalterten Antriebseinrichtung sowohl das Eintriebsglied des Vorschubgetriebes als auch das Eintriebsglied eines Fräsergetriebes zur Eigendrehung des Fräsers sein. Dabei treibt das Vorschubgetriebe vorteilhaft einen am Schlitten drehbar gelagerten Drehteller an, an welchem der Werkzeugträger radial verschiebbar befestigt ist. Dieser Drehteller weist vorteilhaft einen Zahnkranz auf, der mit einem Ritzel in Eingriff ist, das gleichachsig mit einem am Schlitten gelagerten und mit der Ritzelwelle kämmenden Zahnrad gekuppelt ist.

Eine einfache Lagerung des den Werkzeugträger einstellbar halternden Drehtellers läßt sich vorteilhaft erzielen, indem der Drehteller mit seinem Umfang an drei gleichmäßig verteilt am Schlitten angeordneten Führungsrollen gelagert ist.

Zur Auswechslung des Arbeitswerkzeuges einerseits und zu dessen Antrieb andererseits ist nach einem weiteren Merkmal der Erfindung im Werkzeugträger vorteilhaft eine Triebspindel mit einem Spannfutter für Fräser oder Bohrer gelagert, wobei die Triebspindel mit einem das Ausgangsglied des Fräsegetriebes bildenden Zahnrad gekuppelt ist. Dabei umfaßt das Fräsegetriebe vorteilhaft ein mit dem Zahnrad der Triebspindel kämmendes Zwischenrad, das auch mit der Ritzelwelle im Eingriff ist, wobei die Ritzelwelle, das Zwischenrad und das Zahnrad durch ein Paar zweigliedriger Getriebeglieder - einen sogenannten Zweischlag - sowohl während als auch nach der Verschiebung des Werkzeugträgers gegenüber dem Drehteller im Eingriff gehalten sind.

Um bei kompakter Baueinheit Arbeitswerkzeug und Werkzeugträger getrennt voneinander betreiben zu können, ist nach einer weiteren Ausgestaltung der Erfindung außer dem von einem eigenen Erstmotor angetriebenen Arbeitswerkzeug auch der diesen Antriebsmotor halternde und um das Zentrierglied drehbare Werkzeugträger von einem ausschließlich diesem zugeordneten Zweitmotor antreibbar. Die Verteilung der Antriebsleistungen auf zwei Motore und die Reduzierung der Bauteile für ein adäquates Vorschubgetriebe ermöglichen eine kompakte Bauweise der Vorrichtung. Dies läßt sich nach einem Ausgestaltungsmerkmal der Erfindung besonders auch dadurch erzielen, daß der als Getriebemotor ausgebildete Zweitmotor fest mit dem Werkzeugträger verbunden ist und mit einem Ritzel in einen Innenzahnkranz eingreift, der an einem gegenüber einem Positionierring in Werkzeuglängsachse verschiebbaren Schlitten festgelegt ist.

Zur Zuführung des elektrischen Stromes zu den mit dem Werkzeugträger umlaufenden Motoren sind nach einem weiteren Ausgestaltungsmerkmal der Erfindung dem Schlitten Schleifringe zugeordnet, die mit am drehbaren Werkzeugträger festgelegten Stromabgreifern kontaktieren. Dabei sind die Schleifringe vorzugsweise mit Abstand nebeneinander am aus einem Isolierstoff gebildeten Innenzahnkranz angeordnet und mit Stromleitungen verbunden, zwischen die ein im Bereich der Handhabe angeordneter, von einem Druckstift betätigbarer Schalter geschaltet ist.

Um eine stufenlose Einstellung des Abstandes zwischen dem Zentrierglied und dem Arbeitswerkzeug zu erzielen, ist nach einem weiteren Ausgestaltungsmerkmal der Erfindung der gegebenenfalls als Getriebemotor ausgebildete Erstmotor an einer eine Aussparung des Werkzeugträgers abdeckenden Halteplatte festgelegt, die schwenkbar und feststellbar mit dem Werkzeugträger verbunden ist. Dabei ist der Erstmotor mit einem Schaftteil und einem Spannfutter, die Halteplatte und den Werkzeugträger zum Positionierring hin durchdringend, mittels einem an der Halteplatte festgelegten Spannring festklemmbar.

Zum Schutz der Bedienungsperson und auch der Bauteile sind nach einem weiteren Ausgestaltungsmerkmal der Erfindung der Innenzahnkranz, der Werkzeugträger, dessen Führungsrollen, die Halteplatte und die beiden Motore durch eine am Schlitten lösbar befestigte Haube abdeckbar. Um jedoch die Zugänglichkeit der Bauteile auf einfache Weise ermöglichen zu können, ist die Haube vorteilhaft mittels eines Schnellspannverschlusses mit dem Schlitten verbunden.

Damit bei hoher Drehzahl des Arbeitswerkzeuges dessen verstellbare Lagerung auf breiter Basis abgestützt werden kann, ist an dem sich um das Zentrierglied drehenden Werkzeugträger ein Schwenkarm gelagert, dessen freies Ende ein Spannfutter für das Arbeitswerkzeug lagert, das über wenigstens zwei Getriebestufen mit umgekehrten Übersetzungsverhältnissen mit der gleichen Drehzahl des zentralen Antriebsmotors umläuft. Durch die Verwendung eines Schwenkarmes für die stufenlose Radialeinstellung des Arbeitswerkzeuges gegenüber dem Zentrierglied läßt sich die Lagerung des Schwenkarmes durch dessen Abstützung auf breiter Basis günstig gestalten. Dabei ist es vorteilhaft, den Schwenkarm konzentrisch zur Welle des zweiten Rades der ersten Getriebestufe zu lagern, da auf diese Weise keine Achsabstandsänderungen zum verschwenkbaren Arbeitswerkzeug bei der diesem zugehörigen Getriebestufe auftreten.

Zur Erzeugung einer gegenüber der Drehzahl des Arbeitswerkzeuges wesentlich langsameren motrisch betriebenen Umlaufbewegung dieses Arbeitswerkzeuges um das Zentrierglied dient die Welle des zweiten Rades der ersten Getriebestufe dem Abgriff für mehrere nachgeschaltete, am Werkzeugträger gelagerte Getriebestufen zur Untersetzung der Umlaufdrehzahl des Werkzeugträgers gegenüber der Motordrehzahl. Dabei mag das letzte Rad der letzten Getriebestufe vorteilhaft aus dem Kragen eines in Längsrichtung des Arbeitswerkzeuges verschiebbaren, aber undrehbaren Schlittens gebildet sein, um den das erste Rad der letzten Getriebestufe zusammen mit dem Werkzeugträger und dem Schwenkarm umläuft.

Zur Erzielung eines einfachen Aufbaues des Untersetzungsgetriebes für den Umlauf des Werkzeugträgers ist dieser aus einer ersten Scheibe und einer dazu abstandsweise angeordneten zweiten Scheibe gebildet, wobei die Scheiben über die Wellen der Getriebestufen miteinander verbunden sind, und die Scheiben außer der letzten Getriebestufe alle anderen Getriebestufen zwischen sich einschließen. Dabei ist die dem Antriebsmotor benachbarte Scheibe des Werkzeugträgers am Kragen des Schlittens drehbar gelagert.

Obschon es denkbar ist, zur Bildung der Getriebestufen Reibräder, Zahnräder od.dgl. einzusetzen, so ist es doch vorteilhaft, die Getriebestufen von Riementrieben zu bilden.

Eine abgekapselte Getriebeeinheit läßt sich vorteilhaft dadurch schaffen, daß der Schlitten topfartig gestaltet ist, der an seiner Unterseite von der zweiten, ebenfalls topfartigen und unterseitig offenen Scheibe des Werkzeugträgers unterfaßt ist, wobei die Getriebestufen im Hohlraum des Schlittens untergebracht sind.

Die Erfindung ist in Ausführungsbeispielen auf der Zeichnung dargestellt und wird nachfolgend näher erläutert. Es zeigen:

Fig. 1    eine vom motorischen Antrieb des Arbeitswerkzeuges abgesehen ausschließlich manuell zu betätigende Vorrichtung in einem Vertikalschnitt nach der Linie I - I von Fig. 2,

Fig. 2    die aus Fig. 1 ersichtliche Vorrichtung in einer Draufsicht,

Fig. 3    die in einer ausgebrochenen Schnittansicht dargestellte Vorrichtung in Pfeilrichtung III von Fig. 2 gesehen, aus der die Skala zur Einstellung des Abstandes zwischen dem Zentrierglied und dem Arbeitswerkzeug ersichtlich ist,

Fig. 4    den Randbereich einer als Griffring ausgebildeten Handhabe in einer Schnittdarstellung, wobei der Griffring mit den am Schlitten festgelegten Speichen über ein Klinkengesperre verbunden ist,

Fig. 5    ein weiteres Ausführungsbeispiel der erfindungsgemäßen Vorrichtung in einem Halbschnitt nach der Linie V - V von Fig. 6, bei welchem außer dem motorischen Antrieb des Arbeitswerkzeuges auch dessen Vorschubbewegung in Umfangsrichtung der zu erstellenden Wandausnehmung motorisch erfolgt,

Fig. 6    die aus Fig. 5 ersichtliche Vorrichtung in einer aufgebrochenen Draufsicht,

Fig. 7    eine Draufsicht auf den Werkzeugträger mit dem dem Arbeitswerkzeug zugehörigen Fräsergetriebe in einer schematischen Darstellung, wobei sich das Arbeitswerkzeug in seiner größten Abstandslage vom Zentrierglied befindet,

Fig. 8    eine der Fig. 7 vergleichbare Draufsicht der Vorrichtung, bei welcher sich das Arbeitswerkzeug in seinem kleinstmöglichen Arbstand vom Zentrierglied befindet.

Fig. 9    eine von zwei Motoren angetriebene Vorrichtung in einem Vertikalschnitt nach der Linie IX - IX von Fig. 10,

Fig. 10    die aus Fig. 9 ersichtliche Vorrichtung in einer Draufsicht nach der Schnittlinie X - X von Fig. 9 in teilweise aufgebrochener Schnittdarstellung,

Fig. 11    die aus den Fig. 9 und 10 ersichtliche Vorrichtung in einer Ansicht in Richtung des Pfeiles XI von Fig. 10,

Fig. 12    eine ein Getriebe aufweisende Vorrichtung in einem Längsschnitt nach der Linie XII - XII von Fig. 13,

Fig. 13    die aus Fig. 12 ersichtliche Vorrichtung in einer schematischen Draufsicht zur Veranschaulichung der Getriebestufen des Untersetzungsbetriebes.

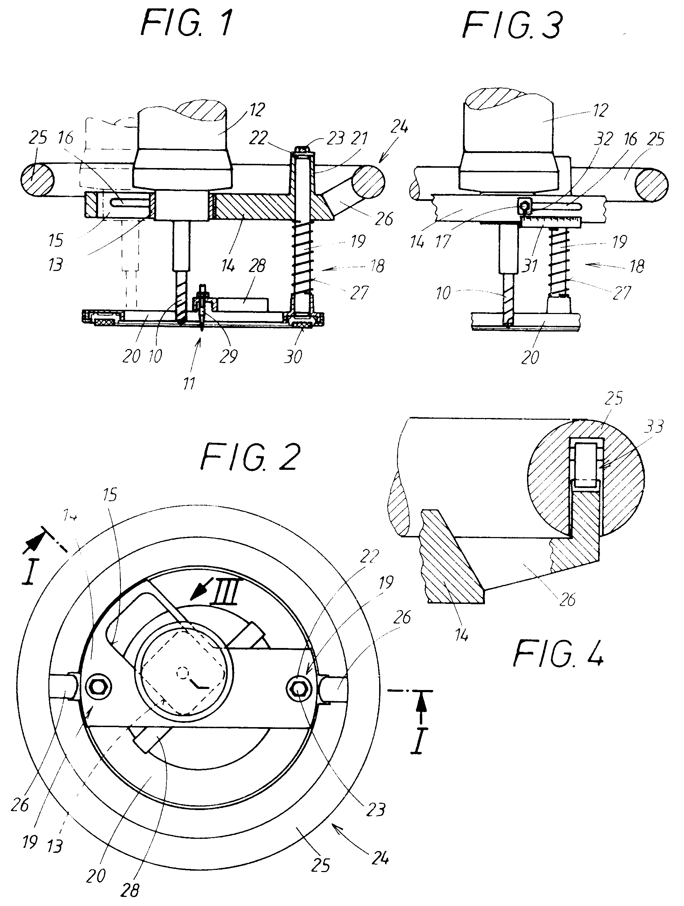

Bei dem aus den Fig. 1 bis 4 ersichtlichen Ausführungsbeispiel erfolgt lediglich der Antrieb für die Eigendrehung des Arbeitswerkzeuges 10 auf motorische Weise, wozu im einfachsten Fall als Antriebseinheit 12 eine elektrische Bohrmaschine Verwendung finden kann, die in einem Werkzeugträger 13 aufgenommen ist. In das Bohrfutter der als Bohrmaschine ausgebildeten Antriebseinheit 12 läßt sich in bekannter Weise als Arbeitswerkzeug 10 ein Fräser einsetzen, der erforderlichenfalls gegen ein anderes Arbeitswerkzeug austauschbar ist. Der Werkzeugträger 13 ist quer zur Längsachse des Arbeitswerkzeuges 10 verschiebbar in der Kulisse 15 eines Schlittens 14 angeordnet, und läßt sich in dieser Kulisse 15 mittels einer ein Langloch 16 des Schlittens 14 durchgreifenden Spannschraube 17 festlegen. Der Schlitten 14 ist an einem Ständer 18 in Fräserlängsrichtung verschiebbar geführt, wobei der Ständer 18 im vorliegenden Fall aus wenigstens zwei einander diametral gegenüberliegend angeordneten Säulen 19 besteht, die mit ihrem Unterende an einem auf die Wand aufsetzbaren Positionierring 20 festgelegt sind. Diese Säulen 19 greifen mit Ihrem Oberende in Führungen 21 des Schlittens 14 ein und sind oberendig mit einem die Führungen übergreifenden Anschlag versehen, der aus einer die jeweilige Säule 19 überragenden Scheibe 22 gebildet sein kann, die ihrerseits beispielsweise mittels einer Schraube 23 an der Säule 19 festgelegt ist. Der Schlitten 14 weist eine Handhabe 24 auf, die bei dem aus den Fig. 1 bis 4 ersichtlichen Ausführungsbeispiel als Griffring 25 den Schlitten 14 umrundet und mit diesem durch Speichen 26 verbunden ist.

Zwischen dem Positionierring 20 und dem Schlitten 14 befindet sich eine Rückstelleinrichtung, die aus beispielsweise die Säulen 19 umgreifenden Druckfedern gebildet sein kann, die sich einerends am Positionierring 20 und andernends am Schlitten 14 abstützen und gegen deren Rückstellkraft der Schlitten 14 gegenüber dem Positionierring 20 in Fräserlängsachse verschoben werden kann.

Der mit den Säulen 19 fest verbundene Positionierring 20 weist bei dem aus den Fig. 1 bis 4 ersichtlichen Ausführungsbeispiel eine Diametralstrebe 28 auf, an welcher das Zentrierglied 11 festgelegt ist, das bei dieser Ausführungsform aus einem angespitzten Stift 29 gebildet ist, der in der Diametralstrebe 28 verschraubt ist. An der Unterseite des Positionierringes 20 befindet sich eine Auflage 30, die vorzugsweise aus einem Moosgummiring gebildet ist und beispielsweise in eine Ringnut des Positionierringes 20 derart eingesetzt ist, daß die Unterseite des Positionierringes geringfügig überragt wird.

Am Schlitten 14 befindet sich im Bereich des Langloches 16 eine Skala 31, der eine dem Werkzeugträger 13 zugehörige Markierung 32 zugeordnet ist, und womit die Abstandslage des Arbeitswerkzeuges 10 gegenüber dem Zentrierglied 11 ablesbar ist. Um die Abstandslage des Fräsers 10 gegenüber dem Zentrierglied für die gebräuchlichsten, normgemäßen Durchmesser der verwendeten Hohlwanddosen leicht einstellen zu können, ist die Verwendung von nicht dargestellten Rasteinrichtungen zwischen der Kulisse 15 des Schlittens 14 und dem Werkzeugträger 13 möglich. Diese Rasteinrichtungen können beispielsweise in bekannter Weise aus einen am einen Bauteil festgelegten Kugelschnäpper und aus einer am anderen Bauteil angeordneten Rastausnehmung gebildet sein.

Außerdem kann die starre Verbindung zwischen dem Schlitten 14 und dem Griffring 25 durch die Verwendung eines zwischen Speichen 26 und Griffring 25 angeordneten Klinkengesperres 33 ersetzt sein. Dieses Klinkengesperre erlaubt eine Rückdrehung des Griffringes 25 entgegen der Vorschubbewegung in Umfangsrichtung um das Zentrierglied 11 herum, so daß die Bedienungsperson am Griffring 25 nicht umgreifen muß, um die Vorschubbewegung des Fräsers 10 zu einer vollen Kreisbewegung von 360° um das Zentrierglied 11 herum zu vollenden.

Zur Herstellung einer Wandausnehmung mit der vorbeschriebenen Vorrichtung wird zunächst der erforderliche Abstand zwischen dem Zentrierglied 11 und dem Fräser 10 mit Hilfe der Skala 31 und der Markierung 32 eingestellt und durch die Spannschraube 17 festgelegt. Sodann wird die Bedienungsperson mittels der Handhabe 24 die Vorrichtung mit dem Positionierring 20 an der gewünschten Stelle an der Wand ansetzen und die Antriebseinheit 12 zum Antrieb des Arbeitswerkzeuges 10 in Betrieb nehmen. Sodann drückt die Bedienungsperson über den Griffring 25 den Schlitten 14 mit dem daran festgelegten Werkzeugträger 13 und dem daran gehalterten Fräser 10 in Richtung auf die Wand, so daß der Fräser 10 im eingestellten Abstand zum Zentrierglied 11 eine Bohrung in die Wand bis zu der gewünschten Tiefe oder durch die Wand selbst einbringt. Sodann dreht die Bedienungsperson in der niedergedrückten Lage des Schlittens 14 diesen zusammen mit dem Positionierring 20 und dem am Schlitten festgelegten Werkzeugträger 13 um das Zentrierglied 11 herum, bis ein Kreis von 360° beschrieben wurde, und somit die gewünschte Wandausnehmung gebildet ist.

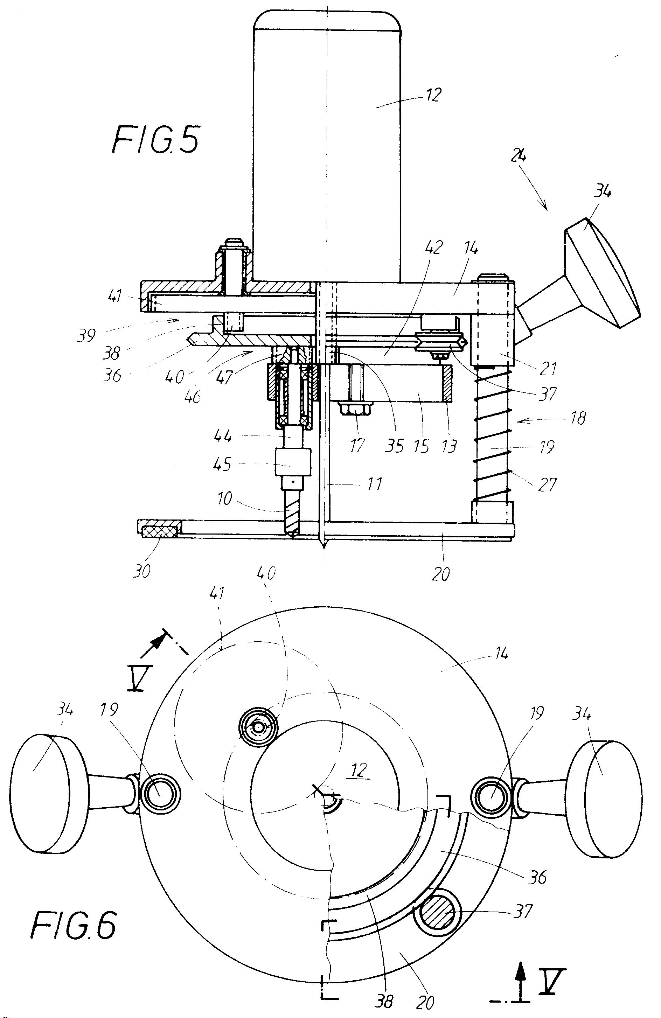

Bei dieser Ausführungsform ist also ein manueller Vorschub in Umfangsrichtung der zu erstellenden Wandausnehmung erforderlich. Bei dem aus den Fig. 5 bis 8 ersichtlichen Ausführungsbeispiel erfolgt auch die in Umfangsrichtung ausgeübte Vorschubbewegung über einen motorischen Antrieb. Obschon der prinzipielle Aufbau der aus den Fig. 5 bis 8 ersichtlichen Vorrichtung demjenigen, der aus den Fig. 1 bis 4 ersichtlichen Vorrichtung entspricht, ist die oben beschriebene Vorrichtung in der nachfolgend beschriebenen Weise modifiziert. Auch diese Vorrichtung weist wie die aus den Fig.

1 bis 4 ersichtliche Vorrichtung einen an einem aus Säulen 19 gebildeten Ständer 18 mit Führungen 21 gehalterten und in vertikaler Richtung manuell verschiebbaren Schlitten 14 auf, an dem eine Antriebseinheit 12, beispielsweise in Form eines Getriebemotors, festgelegt ist. Die Säulen 19 sind ebenfalls mit ihrem Unterende an einem Positionierring 20 festgelegt, der unterseitig ebenfalls eine aus einem Moosgummiring gebildete Auflage 30 aufweist. Aus dem Zentrum dieses Positionierringes 20 ragt über die Auflage 30 ein Zentrierglied 11 in Form eines im oberen Bereich der Vorrichtung festgelegten und unterseitig angespitzten Zylinderstiftes vor. Am Schlitten 14 ist ebenfalls eine Handhabe 24 angeordnet, die jedoch bei dem aus den Fig. 5 bis 8 ersichtlichen Ausführungsbeispiel aus zwei einander diametral gegenüberliegenden Griffen 34 gebildet ist.

Im Unterschied zu dem vorbeschriebenen Ausführungsbeispiel ragt aus der beispielsweise als Getriebemotor ausgebildeten Antriebseinheit 12 eine Ritzelwelle 35 bis in den Freiraum zwischen Schlitten 14 und Positionierring 20 vor. Außerdem ist im Gegensatz zur vorbeschriebenen Ausführungsform unterhalb des Schlittens 14 ein Drehteller 36 angeordnet, der an wenigstens drei auf seinem Umfang gleichmäßig verteilt angeordneten Führungsrollen 37 gelagert ist. Diese Führungsrollen 37 sind ihrerseits am Schlitten 14 drehbar gelagert. Der Drehteller 36 weist seinerseits einen zum Schlitten 14 hinweisenden, im vorliegenden Fall innenverzahnten Zahnkranz 38 auf, der Bestandteil eines Vorschubgetriebes 39 ist. Dieser Zahnkranz 38 kämmt mit einem Ritzel 40, das gleichachsig mit einem Zahnrad 41 gekuppelt ist, das seinerseits in die Ritzelwelle 35 eingreift, die ihrerseits das Eingangsgetriebeglied des Vorschubgetriebes 39 bildet, zu dem auch das Ritzel 41 und das mit diesem gemeinsam am Schlitten 14 gelagerte Zahnrad 41 gehören.

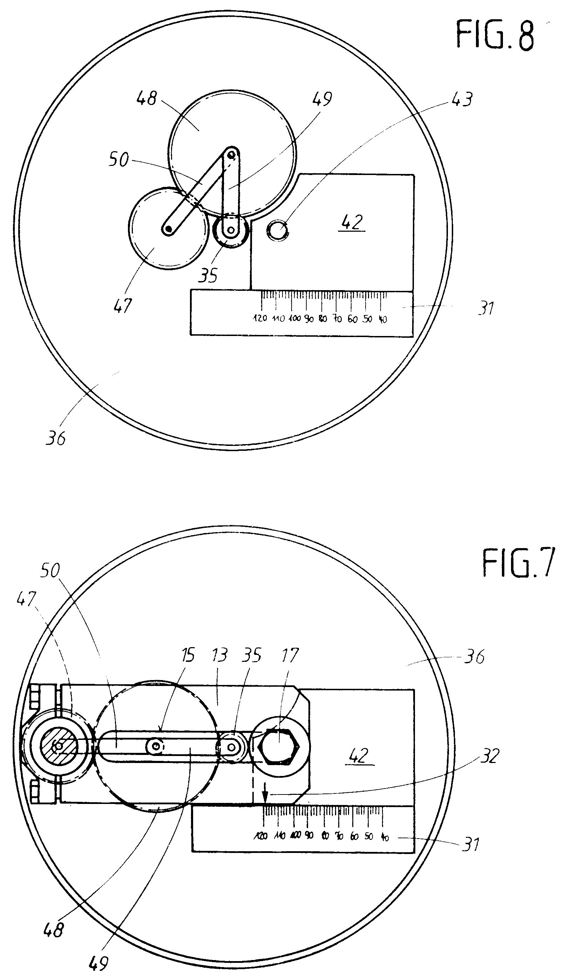

Unterhalb des Drehtellers 36 ist an diesem - wie insbesondere aus den Fig. 7 und 8 ersichtlich ist - eine Distanzplatte 42 festgelegt, die eine Gewindebohrung 43 zur Aufnahme der Spannschraube 17 aufweist, mit deren Hilfe der über die Kulisse 15 verschiebbare Werkzeugträger 13 am Drehteller 36 festlegbar ist. In diesem Werkzeugträger 13 ist eine Triebspindel 44 gelagert, die zur Aufnahme des Arbeitswerkzeuges 10 ein Spannfutter 45 aufweist. Zwischen dem Drehteller 36 und dem Werkzeugträger 13 ist mit der Triebspindel 44 ein Zahnrad 47 drehfest verbunden, das seinerseits über ein Zwischenrad 48 in Triebverbindung mit der Ritzelwelle 35 der Antriebseinheit 12 steht. Das Zahnrad 47 und das Zwischenrad 48 bilden mit der auch dem Vorschubgetriebe 39 gemeinsamen Ritzelwelle 35 das Fräsergetriebe 46 zum Antrieb des Arbeitswerkzeuges 10. Um eine stufenlose Verschiebung des Werkzeugträgers 13 unter Beibehaltung der Antriebsverbindung der Triebspindel 44 mit der Ritzelwelle 35 zu ermöglichen, ist die Achse des Zwischenrades 48 durch ein Paar zweigliedriger Getriebeglieder 49 und 50 - die in der Getriebelehre als Zweischlag bezeichnet sind - mit den Achsen der Ritzelwelle 35 und des Zahnrades 47 verbunden, so daß in jedem Fall der Verstellung das Zahnrad 47 mit dem Zwischenrad 48 im Eingriff ist, das seinerseits auch stets mit der Ritzelwelle 35 im Eingriff ist. Die Ritzelwelle 35 ist niemals unmittelbar mit dem Zahnrad 47 im Eingriff, sondern immer nur über das Zwischenrad 48.

Bei dem aus den Fig. 5 bis 8 ersichtlichen Ausführungsbeispiel ist ebenfalls eine Skala 31 und eine Markierung 32 vorgesehen, womit zur Einstellung des Abstandes zwischen dem Zentrierglied 11 und dem Arbeitswerkzeug 10 der zugehörige Durchmesser der herzustellenden Wandausnehmung ablesbar ist. Dabei ist die Skala 31 dem Drehteller 36 zugeordnet und beispielsweise an der Distanzplatte 42 befestigt, während sich die Markierung 32 am Werkzeugträger 13 befindet.

Auch bei dieser einen motorisch betriebenen Umfangsvorschub aufweisenden Vorrichtung wird zunächst im entsprechend eingestellten Abstand zum Zentrierglied 11 bei zunächst nur angetriebenen Arbeitswerkzeug 10 an der dafür vorgesehenen Stelle in die Wand ein Loch in der Tiefe der beabsichtigten Wandausnehmung oder auch durch die Wand hindurch, durch manuelles Niederdrücken des Schlittens 14 gegenüber seinem über den Positionierring an der Wand gehalterten Ständer 18 eingebohrt. Das danach zuschaltbare Vorschubgetriebe 39 verdreht dann im vorbeschriebenen Sinne den Drehteller 36, mit welchem zusammen der Werkzeugträger 13 und auch das Arbeitswerkzeug 10 umläuft und die Wandausnehmung ausfräst. Während dieses Fräsvorganges braucht der Schlitten 14 lediglich in seiner niedergedrückten Lage festgehalten zu werden.

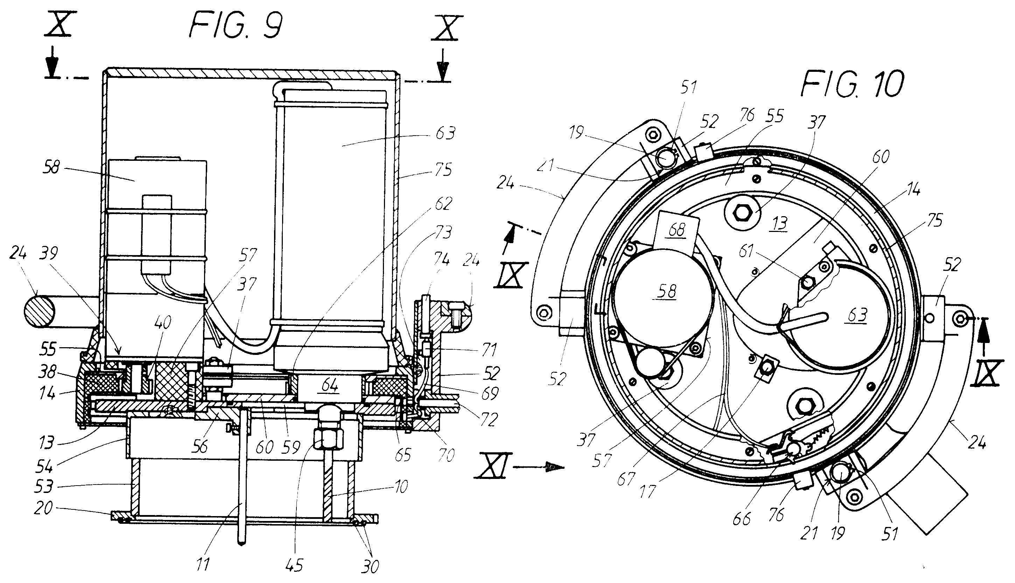

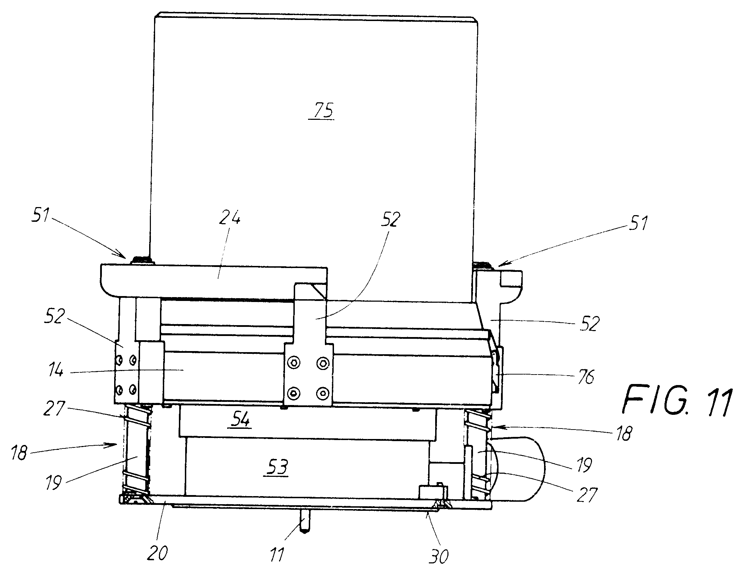

Die aus den Figuren 9 bis 11 ersichtliche Vorrichtung weist einen im wesentlichen aus einem Ringgehäuse gebildeten Schlitten 14 auf, der an einem Ständer 18 in Längsrichtung des Arbeitswerkzeuges 10 verschiebbar geführt ist. Der Ständer 18 besteht aus wenigstens zwei einander diametral gegenüberliegend angeordneten Säulen 19, die mit ihrem Unterende an einem auf die Wand aufsetzbaren Positionierring 20 festgelegt sind. Diese Säulen 19 greifen mit ihrem Oberende in Führungen 21 von Verbindungsleisten 52 des Schlittens 14 ein und sind oberendig mit einem die Führungen übergreifenden Anschlag versehen, der beispielsweise aus einer die jeweilige Säule 19 überragenden und an dieser festgelegten Sicherungsscheibe 52 in Form eines Seegerringes gebildet sein kann. Der Schlitten 14 weist eine Handhabe 24 auf, die bei dem Ausführungsbeispiel aus Ringsegmenten gebildet ist, die auf einander gegenüberliegenden Seiten des Schlittens 14 an diesen über teilweise Führungen 21 für die Säulen 19 enthaltenden Verbindungsleisten 52 angeschlossen sind.

Zwischen dem Positionierring 20 und dem Schlitten 14 befindet sich eine Rückstelleinrichtung 27, die aus beispielsweise die Säulen 19 umgreifenden Druckfedern gebildet sein kann, die sich einerends am Positionierring 20 und andernends am Schlitten 14 abstützen, und gegen deren Rückstellkraft der Schlitten 14 gegenüber dem Positionierring 20 in Richtung der Längsachse des Arbeitswerkzeuges 10 verschoben werden kann.

Der mit den Säulen 19 fest verbundene Positionierring 20 weist unterseitig eine aus beispielsweise zwei Moosgummiringen gebildete Auflage 30 auf und ist mit einem Ringrohr 53 verbunden, welches teleskopartig in einen am Werkzeugträger 13 unterseitig angeordneten Winkelring 54 beim Niederdrücken des Schlittens 14 eintauchen kann.

Der Werkzeugträger 13 besteht im wesentlichen aus einer Kreisscheibe, an welcher drei aufragende Führungsrollen 37 befestigt sind, die mit Umfangsausnehmungen auf einer am Schlitten 14 festgelegten Ringschiene 55 geführt sind und somit den Werkzeugträger 13 in axialer Richtung unverschiebbar, jedoch drehbar am Schlitten 14 haltern. Im Zentrum des kreisförmigen Werkzeugträgers 13 ist das aus beispielsweise einer angespitzten Stange bestehende Zentrierglied 11 angeordnet, indem ein Anschlußschuh 56 fest mit dem Werkzeugträger 13 verbunden ist.

Am Werkzeugträger 13 ist außerdem auf einer Seite eine Motorkonsole 57 befestigt, die ihrerseits dem Anschluß eines als Elektromotor mit einem integrierten Untersetzungsgetriebe ausgebildeten Zweitmotores 58 dient. Auf der Antriebswelle dieses Zweitmotores ist ein Ritzel 40 befestigt, das seinerseits mit einem Innenzahnkranz 38 kämmt, der seinerseits am Schlitten 14 undrehbar und unverschiebbar festgelegt ist. Der Innenzahnkranz 38 und das Ritzel 40 bilden zusammen mit dem Zweitmotor 58 ein Vorschubgetriebe 39, durch welches der Werkzeugträger 13 um das Zentrum des Zentriergliedes 11 umlaufen kann.

Auf der dem Zweitmotor 58 gegenüberliegenden Seite weist der Werkzeugträger 13 eine Aussparung 59 auf, die von einer Halteplatte 60 überdeckt ist, die mittels der Spannschrauben 17 und 61 am Werkzeugträger 13 festlegbar ist. Außer Spannfunktionen übernimmt die Spannschraube 61 außerdem auch noch die Funktion einer Schwenkachse für die Halteplatte 60, die um die Spannschraube 61 herum zur Veränderung des Abstandes des Arbeitswerkzeuges 10 zum Zentrierglied 11 verschwenkbar ist. Die einen Durchbruch aufweisende Halteplatte 60 weist außerdem einen Spannring 62 auf, mit welchem der Schaftteil 64 eines ein Spannfutter 45 aufweisenden, möglicherweise auch als Getriebemotor ausgebildeten Erstmotors 63 an der Halteplatte 60 festlegbar ist. Dadurch ist über den Erstmotor 63 das beispielsweise als Fräser ausgebildete Arbeitswerkzeug 10 unabhängig von der Betätigung des Vorschubgetriebes 39 durch den Zweitmotor 58 antreibbar.

Zur Stromversorgung der Motore dienen dem Schlitten 14 zugeordnete Schleifringe 65, die mit Abstand übereinanderliegend an dem aus Isolierstoff gebildeten Innenzahnkranz 38 angeordnet sind. Mit diesen Schleifringen 65 kontaktieren Stromabgreifer 66, die am Werkzeugträger 13 festgelegt sind. Von diesen Stromabgreifern 66 führen Leitungen 67 zu einem beispielsweise am Zweitmotor 58 festgelegten Verteiler 68, von welchem aus die Stromeinspeisung zum einen zum Zweitmotor und zum anderen zum Erstmotor 63 geführt ist.

Die Stromzuführung zu den Schleifringen 65 erfolgt durch Stromleitungen 69 und 70, zwischen denen ein betätigbarer Schalter 71 angeordnet ist. Dabei ist das die Stromleitungen 69 und 70 beinhaltende Kabel 72 in eine der Verbindungsleisten 52 eingeführt, wobei diese Verbindungsleiste 52 zum Zwecke der Unterbringung des Schalters 71 mit einem Hohlraum 73 versehen ist, der sich zur Oberseite der Verbindungsleiste 52 hin in einer Bohrung fortsetzt, in welcher ein Druckstift 74 zur Betätigung des Schalters 71 angeordnet ist und aus der Oberseite der Handhabe 24 ausragt.

Auf die Oberseite des Schlittens 14 ist eine Haube 75 aufsetzbar, durch welche der Innenzahnkranz 38, der Werkzeugträger 13, dessen Führungsrollen 37, die Halteplatte 60 und auch die beiden Motore 58 und 63 abdeckbar sind. Diese Haube 75 ist am Schlitten lösbar gehaltert, indem am Schlitten 14 ein Schnellspannverschluß 76 befestigt ist, mit dem die Haube 75 gegen die Oberseite des Schlittens 14 andrückbar und in dieser Lage sicherbar ist.

Vor Benutzung der aus den Fig. 9 - 11 ersichtlichen Vorrichtung ist es erforderlich, in die Wand eine Bohrung zur Aufnahme des Zentriergliedes 11 einzubringen. Erst dann wird die Vorrichtung angesetzt, indem das mit dem Werkzeugträger 13 drehende Zentrierglied 11 in die Wandbohrung eingesteckt wird, wonach durch Inbetriebnahme des Erstmotors 63 über das beispielsweise als Fräser ausgebildete Arbeitswerkzeug 10 eine Bohrung im eingestellten Abstand zum Zentrierglied 11 in die Wand zusätzlich eingebracht wird. Durch Zuschaltung des Zweitmotors 58 wird mit dem Werkzeugträger 13 die Halteplatte 60 in Drehung versetzt, so daß das Arbeitswerkzeug 10 beginnt, um das Zentrierglied 11 umzulaufen, wodurch eine ringförmige Fräsnut in der Wand erzeugt wird. Der von der Fräsnut umfaßte Wandbereich läßt sich dann ausbrechen, so daß eine Wandausnehmung zum Einbau von Dosen für Elektroinstallationsgeräte entsteht.

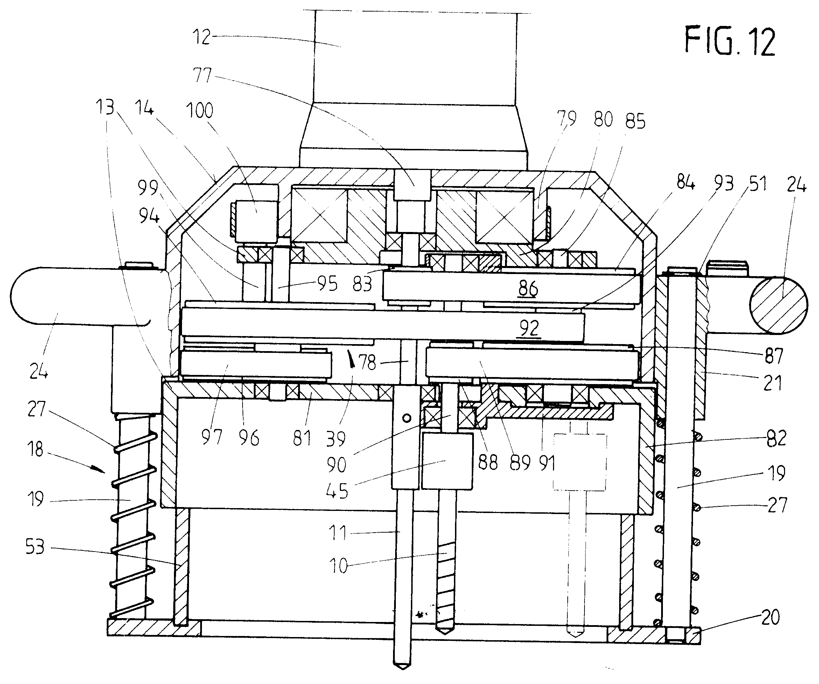

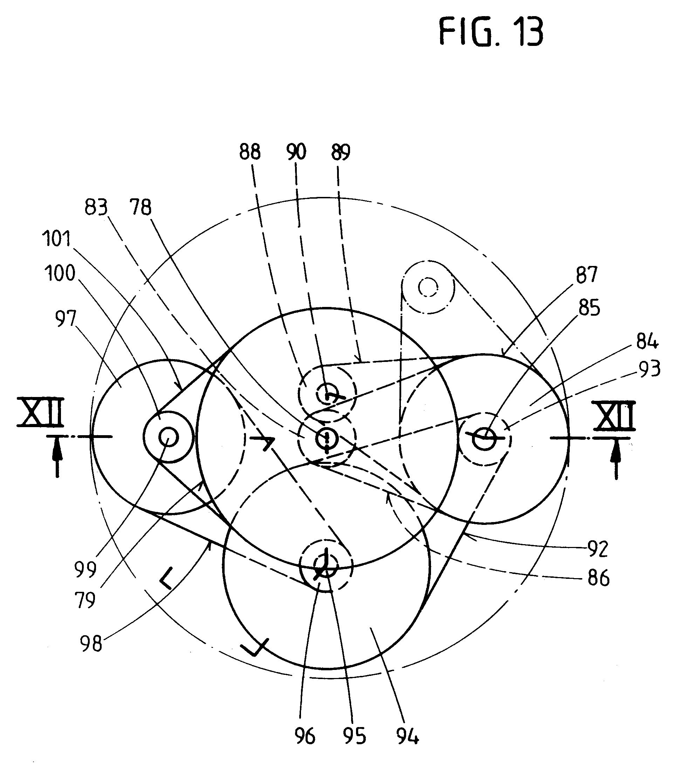

Die aus den Fig. 12 und 13 ersichtlicheVorrichtung weist einen topfartig ausgebildeten Schlitten 14 auf, der an einem Ständer 18 in Längsrichtung des Arbeitswerkzeuges 10 verschiebbar geführt ist. Der Ständer 18 besteht aus wenigstens zwei einander diametral gegenüberliegend angeordneten Säulen 19, die mit ihrem Unterende an einem auf die Wand aufsetzbaren Positionierring 20 festgelegt sind. Diese Säulen 19 greifen mit ihrem Oberende in Führungen 21 von Handhaben 24 des Schlittens 14 ein und sind oberendig mit einem die Führung übergreifenden Anschlag versehen, der beispielsweise aus einer die jeweilige Säule 19 überragenden und an dieser festgelegten Sicherungsscheibe 51, beispielsweise in Form eines Seegerringes,gebildet sein kann. Der Schlitten 14 weist eine Handhabe 24 auf, die beispielsweise aus auf einander gegenüberliegenden Seiten des Schlittens 14 an diesen angeschlossenen Ringsegmenten besteht.

Zwischen dem Positionierring 20 und dem Schlitten 14 befindet sich eine Rückstelleinrichtung 27, die aus beispielsweise die Säulen 19 umgreifenden Druckfedern gebildet sein kann, die sich einerends am Positionierring 20 und andernends am Schlitten 14 abstützen, und gegen deren Rückstellkraft der Schlitten 14 gegenüber dem Positionierring 20 in Richtung der Längsachse des Arbeitswerkzeuges 10 verschoben werden kann. Der mit den Säulen 19 fest verbundene Positionierring 20 ist mit einem Ringrohr 53 verbunden, welches teleskopartig in einen am Werkzeugträger 13 unterseitig angeordneten Ringmantel beim Niederdrükken des Schlittens 14 eintauchen kann.

Auf der geschlossenen Oberseite des Schlittens 14 ist als einzige Antriebseinheit 12 ein Elektromotor befestigt, der mit seiner Motorwelle 77 zentral in den Innenraum des Schlittens eingreift. Diese Motorwelle 77 ist mit einer Verlängerungswelle 78 fest verbunden, auf die unterseitig ein Zentrierglied 11 in Form einer Stange aufgesteckt und mit dieser derartig verbunden ist, daß das angespitzte Ende des Zentriergliedes 11 den Positionierring 20 unterseitig überragt.

Der topfförmige Schlitten 14 weist an seinem oberseitigen Boden konzentrisch zu der seinen Mittelpunkt durchdringenden Motorwelle 77 einen ringförmigen Kragen 79 auf, an welchem über ein nicht näher dargestelltes, jedoch übliches Wälzlager eine erste Scheibe 80 gelagert ist, die mit einem weiteren Wälzlager die Verlängerungswelle 78 der Motorwelle 77 stützt. Im Abstand zur ersten Scheibe 80 ist eine zweite Scheibe 81 auf der Verlängerungswelle 78 gelagert, die den Schlitten 14 an seiner offenen Seite untergreift und mit einem nach unten abragenden Ringmantel 82 das Ringrohr 53 des Positionierringes 20 teleskopartig übergreifen kann. Die erste Scheibe 80 bildet zusammen mit der zweiten Scheibe 81 den Werkzeugträger 13, der aufgrund des zwischen diesen eingeschlossenen Vorschubgetriebes 39 um das Zentrierglied 11 umlaufen kann.

Unterhalb der Scheibe 80 ist mit der Verlängerungswelle 78 der Motorwelle 77 ein erstes Rad 83 fest verbunden, das zusammen mit einem auf der in den Scheiben 80 und 81 gelagerten Welle 85 drehfest verbundenen zweiten, größeren Rad 84 die erste Getriebestufe 86 bildet, indem das erste Rad 83 mit dem zweiten Rad 86 über einen Riemen miteinander in Verbindung stehen. In Nachbarschaft zur Scheibe 81 des Werkzeugträgers 13 ist an der Welle 85 ein weiteres Rad 87 mit dem gleichen Durchmesser wie das Rad 84 drehfest angeordnet, das über einen Riementrieb mit einem durchmesserkleineren, vierten Rad 88 - dessen Durchmesser dem Rad 83 entspricht - in Verbindung steht, und die zweite Getriebestufe 89 bildet. Dabei ist das vierte Rad 88 auf einer Welle 90 angeordnet, die in einem Schwenkarm 91 gelagert ist, der seinerseits konzentrisch zur Welle 85 an der Scheibe 81 des Werkzeugträgers 13 schwenkbar gelagert ist. An dem aus dem Schwenkarm 91 unterseitig ausragenden Ende der Welle 90 ist diese drehfest mit einem Spannfutter 45 verbunden, das seinerseits das Arbeitswerkzeug 10 - bei dem es sich vorteilhaft um einen Fräser handeln wird - aufnehmen kann.

Zwischen den Getriebestufen 86 und 89 befindet sich eine dritte Getriebestufe 92, deren durchmesserkleines Rad 93 ebenfalls mit der Welle 85 drehfest verbunden ist. Mit diesem Rad 93 steht über einen Treibriemen ein durchmessergrößeres Rad 94 in Verbindung, das seinerseits mit einer weiteren, in den Scheiben 80 und 81 des Werkzeugträgers 13 gelagerten Welle 95 drehfest verbunden ist. Mit dieser Welle 95 ist weiterhin ein durchmesserkleines Rad 96 drehfest verbunden, das zusammen mit einem durchmessergrößeren Rad 97 über einen Treibriemen eine vierte Getriebestufe 98 bildet. Dieses Rad 97 ist auf einer Welle 99 drehfest angeordnet, die ebenfalls in den Scheiben 80 und 81 des Werkzeugträgers 13 drehbar gelagert ist. Diese Welle 99 durchdringt nach oben hin den Werkzeugträger 13 und weist dort ein durchmesserkleines Rad 100 auf, das ebenfalls mit dieser Welle 99 drehfest verbunden ist. Dieses Rad 100 bildet über einen darüber gelegten Treibriemen zusammen mit dem durchmessergroßen Kragen 79 des Schlittens 14 die fünfte Getriebestufe 101.

Der Schwenkarm 91 kann durch nicht dargestellte Mittel in jeder beliebigen Schwenklage zwischen der in Fig. 2 in Voll-Linien dargestellten Position der Welle 90 und der in strichpunktierten Linien dargestellten Position ein- und festgestellt werden. Somit lassen sich bei durch das Vorschubgetriebe 39 umlaufendem Werkzeugträger 13 unterschiedlich große, kreisförmige Rillen in eine Wand einfräsen, wobei die Tiefe der jeweiligen Rille der einzusetzenden Hohlwanddose entspricht, indem das Arbeitswerkzeug 10 entsprechend tief zuvor in die Wand eingebohrt wurde. Durch Einschalten des Elektromotors 12 kann sowohl das Arbeitswerkzeug 10 als auch der Werkzeugträger 13 in Drehung versetzt werden. Dabei entspricht die Drehzahl des Arbeitswerkzeuges 10 infolge der untersetzten bzw. übersetzten Getriebestufen 86 und 89 etwa der Drehzahl der Motorwelle 77, während die Umlaufdrehzahl des Werkzeugträgers 13 entsprechend dem Gesamtuntersetzungsverhältnis wesentlich geringer ist und dem zulässigen Vorschub für das als Fräser fungierende Arbeitswerkzeug 10 angepaßt ist.

Wie bereits erwähnt, geben die dargestellten und vorbeschriebenen Ausführungsformen die Erfindung lediglich beispielsweise wieder, die keinesfalls allein darauf beschränkt ist. Es sind vielmehr noch mancherlei Änderungen und Ausgestaltungen der Erfindung denkbar. Überdies sind alle in der Beschreibung erwähnten und/oder in der Zeichnung dargestellten, neuen Merkmale erfindungswesentlich, auch wenn sie in den Ansprüchen nicht ausdrücklich beansprucht sind.

**Bezugszeichenliste:**

| | |
|---|---|
| 10 | Arbeitswerkzeug/Fräser |
| 11 | Zentrierglied |
| 12 | Antriebseinheit |
| 13 | Werkzeugträger |
| 14 | Schlitten |
| 15 | Kulisse |
| 16 | Langloch |
| 17 | Spannschraube |
| 18 | Ständer |
| 19 | Säule |
| 20 | Positionierring |
| 21 | Führung, an 14 |
| 22 | Scheibe |
| 23 | Schraube |
| 24 | Handhabe |
| 25 | Griffring |
| 26 | Speiche |
| 27 | Rückstelleinrichtung/Druckfeder |
| 28 | Diametralstrebe |
| 29 | Stift, von 11 |
| 30 | Auflage |
| 31 | Skala |
| 32 | Markierung |
| 33 | Klinkengesperre |
| 34 | Griff |
| 35 | Ritzelwelle |
| 36 | Drehteller |
| 37 | Führungsrolle |
| 38 | Zahnkranz |
| 39 | Vorschubgetriebe |
| 40 | Ritzel |
| 41 | Zahnrad |
| 42 | Distanzplatte |
| 43 | Gewindebohrung |
| 44 | Triebspindel |
| 45 | Spannfutter |
| 46 | Fräsergetriebe |
| 47 | Zahnrad |
| 48 | Zwischenrad |
| 49 | Getriebeglied |
| 50 | Getriebeglied |
| 51 | Sicherungsscheibe |
| 52 | Verbindungsleiste |
| 53 | Ringrohr |
| 54 | Winkelring |
| 55 | Ringschiene |
| 56 | Anschlußschuh |
| 57 | Motorkonsole |
| 58 | Zweitmotor |
| 59 | Aussparung |
| 60 | Halteplatte |
| 61 | Spannschraube |
| 62 | Spannring |
| 63 | Erstmotor |
| 64 | Schaftteil, an 63 |
| 65 | Schleifring |
| 66 | Stromabgreifer |
| 67 | Leitung |
| 68 | Verteiler |
| 69 | Stromleitung |
| 70 | Stromleitung |
| 71 | Schalter |
| 72 | Kabel |
| 73 | Hohlraum, von 52 |
| 74 | Druckstift |
| 75 | Haube |
| 76 | Schellspannverschluß |
| 77 | Motorwelle |
| 78 | Verlängerungswelle |
| 79 | Kragen, an 14 |
| 80 | Scheibe |
| 81 | Scheibe |
| 82 | Ringmantel |
| 83 | Rad |
| 84 | Rad |
| 85 | Welle |
| 86 | Getriebestufe, erste |
| 87 | Rad |
| 88 | Rad |
| 89 | Getriebestufe, zweite |
| 90 | Welle |

| 91 | Schwenkarm |
| 92 | Getriebestufe, dritte |
| 93 | Rad |
| 94 | Rad |
| 95 | Welle |
| 96 | Rad |
| 97 | Rad |
| 98 | Getriebestufe, vierte |
| 99 | Welle |
| 100 | Rad |
| 101 | Getriebestufe, fünfte |

**Patentansprüche**

1. Vorrichtung zum Herstellen von Wandausnehmungen, insbesondere für den Einbau von Dosen für Elektroinstallationsgeräte, wie Hohlwanddosen, mit einem Zentrierglied und einem im Abstand dazu angeordneten, mit einer motorischen Antriebseinrichtung betriebenen Arbeitswerkzeug,

    **dadurch gekennzeichnet,**

    daß der Abstand zwischen dem Zentrierglied (11) und dem an einem Werkzeugträger (13) gelagerten Arbeitswerkzeug (1o) einstellbar und in Einstellage feststellbar ist und daß das Arbeitswerkzeug (1o) aus einem neben einer Eigendrehung auch eine um das Zentrierglied (11) herumführbare Bewegung ausführenden Fräser besteht.

2. Vorrichtung nach Anspruch 1, dadurch gekennzeichnet, daß der Werkzeugträger (13) an einem Schlitten (14) parallel zur Wand einstellbar gehaltert ist, und der Schlitten (14) an einem an der Wand abstützbaren Ständer (18) in Fräserlängsrichtung verschiebbar geführt ist.

3. Vorrichtung nach Anspruch 2, dadurch gekennzeichnet, daß der Ständer (18) aus weingistens zwei einander diametral gegenüberliegenden Säulen (19) gebildet ist, die mit ihrem Unterende an einem die größtmögliche Wandausnehmung umfassenden Positionierring (2o) gehaltert sind und in Führungen (21) des Schlittens (14) eingreifen, der eine Handhabe (24) aufweist.

4. Vorrichtung nach Anspruch 3, dadurch gekennzeichnet, daß zwischen Positionierring (2o) und Schlitten (14) eine Rückstelleinrichtung (27) für den Schlitten (14) angerodnet ist.

5. Vorrichtung nach Anspruch 4, dadurch gekennzeichnet, daß die Rückstelleinrichtung aus die Säulen (19) umfassenden Druckfedern (27) gebildet ist, die einerends am Positionierring (2o) und andernends am Schlitten (14) abgestützt sind.

6. Vorrichtung nach einem oder mehreren der Ansprüche 3 bis 5, dadurch gekennzeichnet, daß der Positionierring (2o) an seiner der Wand zugekehrten Seite mit einer Auflage (3o), insbesondere aus Moosgummi beschichtet ist.

7. Vorrichtung nach einem oder mehreren der vorhergehenden Ansprüche, dadurch gekennzeichnet, daß der Werkzeugträger (13) mit wenigstens einer Spannschraube (17) gegenüber dem Schlitten (14) festlegbar ist.

8. Vorrichtung nach einem oder mehreren der vorhergehenden Ansprüche, dadurch gekennzeichnet, daß dem Schlitten (14) eine Skala (31) zugeordnet ist und am Werkzeugträger (13) eine Markierung (32) angeordnet ist, mit welcher an der Skala der dem eingestellten Abstand zwischen Zentrierglied (11) und Fräser (1o) zugehörige Durchmesser der Wandausnehmung ablesbar ist.

9. Vorrichtung nach einem oder mehreren der vorhergehenden Ansprüche, dadurch gekennzeichnet, daß der in einer dem Schlitten (14) zugeordneten Kulisse (15) angeordnete Werkzeugträger (13) in Einstellagen verrastbar ist, die mit den gebräuchlichsten, normgemäßen Durchmessern der verwendeten Hohlwanddosen übereinstimmen.

10. Vorrichtung nach einem oder mehreren der vorhergehenden Ansprüche, dadurch gekennzeichnet, daß die Handhabe (24) aus zwei einander gegenüberliegenden Griffen (34) am Schlitten (14) gebildet ist.

11. Vorrichtung nach einem oder mehreren der Ansprüche 1 bis 9, dadurch gekennzeichnet, daß die Handhabe (24) aus einem den Schlitten (14) abstandsweise umrundenden Griffring (25) gebildet ist, der über Speichen (26) mit dem Schlitten (14) verbunden ist.

12. Vorrichtung nach Anspruch 11, dadurch gekennzeichnet, daß der Griffring (25) mit den Speichen (26) über ein Klinkengesperre (33) verbunden ist, das in Vorschubrichtung des Fräsers (10) den Griffring (25) formschlüssig mit dem Schlitten (14) verbindet, während der Griffring (25) entgegen der Vorschubrichtung des Fräsers gegenüber dem Schlitten (14) frei rückdrehbar ist.

**13.** Vorrichtung nach einem oder mehreren der vorhergehenden Ansprüche, dadurch gekennzeichnet, daß der Positionierring (2o) eine Diametralstrebe (28) zur Festlegung des aus einem angespitzten Stift (29) gebildeten Zentriergliedes (11) aufweist.

**14.** Vorrichtung nach einem oder mehreren der Ansprüche 1 bis 11, dadurch gekennzeichnet, daß der Werkzeugträger (13) mittels einem am Schlitten (14) angeordneten Vorschubgetriebe (39) in Umlauf um das Zentrierglied (11) bringbar ist.

**15.** Vorrichtung nach Anspruch 14, dadurch gekennzeichnet, daß eine zentrale Ritzelwelle (35) der am Schlitten (14) gehalterten Antriebseinrichtung (12) sowohl das Eintriebsglied des Vorschubgetriebes (39) als auch das Eintriebsglied eines Fräsergetriebes (46) zur Eigendrehung des Fräsers (10) bildet.

**16.** Vorrichtung nach Ansprch 14 und/oder 15, dadurch gekennzeichnet, daß das Vorschubgetriebe (39) einen am Schlitten (14) drehbar gelagerten Drehteller (36) antreibt, an dem der Werkzeugträger (13) radial verschiebbar befestigt ist.

**17.** Vorrichtung nach Anspruch 16, dadurch gekennzeichnet, daß der Drehteller (36) einen Zahnkranz (38) aufweist, der mit einem Ritzel (4o) im Eingriff ist, das gleichachsig mit einem am Schlitten (14) gelagerten und mit der Ritzelwelle (35) kämmenden Zahnrad (41) gekuppelt ist.

**18.** Vorrichtung nach einem oder mehreren der Ansprüche 14 bis 17, dadurch gekennzeichnet, daß der Drehteller (36) an seinem Umfang von drei gleichmäßig verteilt am Schlitten (14) angeordneten Führungsrollen (37) gelagert ist.

**19.** Vorrichtung nach einem oder mehreren der Ansprüche 14 bis 18, dadurch gekennzeichnet, daß im Werkzeugträger (13) eine Triebspindel (44) mit einem Spannfutter (45) für Fräser oder Bohrer gelagert ist, und die Triebspindel (44) mit einem das Ausgangsglied des Fräsergetriebes (46) bildenden Zahnrad (47) gekuppelt ist.

**20.** Vorrichtung nach einem oder mehreren der Ansprüche 14 bis 19, dadurch gekennzeichnet, daß das Fräsergetriebe (46) ein mit dem Zahnrad (47) der Triebspindel (44) kämmendes Zwischenrad (48) umfaßt, das auch mit der Ritzelwelle (35) im Eingriff ist, wobei die Ritzelwelle, das Zwischenrad und das Zahnrad durch ein Paar zweigliedriger Getriebeglieder (49,5o) - einem sogenannten Zweischlag - bei Verschiebung des Werkzeugträgers (13) im Eingriff gehalten sind.

**21.** Vorrichtung nach Anspruch 1, dadurch gekennzeichnet, daß außer dem von einem eigenen Erstmotor (63) angetriebenen Arbeitswerkzeug (10) auch der diesen Antriebsmotor halternde und um das Zentrierglied (11) drehbare Werkzeugträger (13) von einem ausschließlich diesem zugeordneten Zweitmotor (58) antreibbar ist.

**22.** Vorrichtung nach Anspruch 21, dadurch gekennzeichnet, daß der als Getriebemotor ausgebildete Zweitmotor (58) fest mit dem Werkzeugträger (13) verbunden ist und mit einem Ritzel (4o) in einen Innenzahnkranz (38) eingreift, der an einem gegenüber einem Positionierring (2o) in Werkzeuglängsachse verschiebbaren Schlitten (14) festgelegt ist.

**23.** Vorrichtung nach Anspruch 21 und/oder 22, dadurch gekennzeichnet, daß dem Schlitten (14) Schleifringe (65) zugeordnet sind, die mit am drehbaren Werkzeugträger (13) festgelegten Stromabgreifern (66) zur Stromversorgung der Motore (58,63) kontaktieren.

**24.** Vorrichtung nach Anspruch 23, dadurch gekennzeichnet, daß die Schleifringe (65) mit Abstand nebeneinander am aus einem Isolierstoff gebildeten Innenzahnkranz (38) angeordnet und mit Stromleitungen (69,70) verbunden sind, zwischen die ein im Bereich der Handhabe (24) angeordneter, von einem Druckstift (74) betätigbarer Schalter (71) geschaltet ist.

**25.** Vorrichtung nach einem oder mehreren der Ansprüche 21-24, dadurch gekennzeichnet, daß der ebenfalls als Getriebemotor ausgebildete Erstmotor (63) an einer eine Aussparung (59) des Werkzeugträgers (13) abdeckenden Halteplatte (60) festgelegt ist, die schwenkbar und feststellbar mit dem Werkzeugträger (13) verbunden ist.

**26.** Vorrichtung nach Anspruch 25, dadurch gekennzeichnet, daß der Erstmotor (63) mit einem Schaftteil (64) und einem Spannfutter (45) die Halteplatte (60) und den Werkzeugträger (13) zum Positionierring (20) hin durchdringt und mittels einem an der Halteplatte (60) festgelegten Spannring (62) festklemmbar ist.

**27.** Vorrichtung nach einem oder mehreren der Ansprüche 21 bis 26, dadurch gekennzeichnet, daß der Innenzahnkranz (38), der Werkzeugträger (13), dessen Führungsrollen (37), die Halteplatte und die beiden Motore (58,63) durch eine am Schlitten (14) lösbar befestigte Haube (75) abdeckbar sind.

28. Vorrichtung nach Anspruch 27, dadurch gekennzeichnet, daß die Haube (75) mittels eines Schnellspannverschlusses (76) mit dem Schlitten (14) verbindbar ist.

29. Vorrichtung nach Anspruch 1, dadurch gekennzeichnet, daß an dem sich um das Zentrierglied (11) drehenden Werkzeugträger (13) ein Schwenkarm (91) gelagert ist, dessen freies Ende ein Spannfutter (45) für das Arbeitswerkzeug (10) lagert, das über wenigstens zwei Getriebestufen mit umgekehrten Übersetzungsverhältnissen mit der gleichen Drehzahl des zentralen Antriebsmotors (12) umläuft.

30. Vorrichtung nach Anspruch 29, dadurch gekennzeichnet, daß der Schwenkarm (91) konzentrisch zur Welle (85) des zweiten Rades (84) der ersten Getriebestufe (86) gelagert ist.

31. Vorrichtung nach Anspruch 29 und/oder 30, dadurch gekennzeichnet, daß die Welle (85) des zweiten Rades (84) der ersten Getriebestufe (86) dem Abgriff für mehrere nachgeschaltete, am Werkzeugträger (13) gelagerte Getriebestufen (92,98,101) zur Untersetzung der Umlaufdrehzahl des Werkzeugträgers (13) gegenüber der Motordrehzahl dient.

32. Vorrichtung nach einem oder mehreren der Ansprüche 29 bis 31, dadurch gekennzeichnet, daß das letzte Rad der letzten Getriebestufe (101) aus dem Kragen (79) eines in Längsrichtung des Arbeitswerkzeuges (10) verschiebbaren, aber undrehbaren Schlittens (14) gebildet ist, um den das erste Rad (100) der letzten Getriebestufe (101) mit dem Werkzeugträger (13) und dem Schwenkarm (91) umläuft.

33. Vorrichtung nach einem oder mehreren der Ansprüche 29 bis 32, dadurch gekennzeichnet, daß der Werkzeugträger (13) aus einer ersten Scheibe (80) und einer dazu abstandsweise angeordneten, zweiten Scheibe (81) gebildet ist, wobei die Scheiben (80,81) über die Wellen (85,95,99) der Getriebestufen (86,92,98,101) miteinander verbunden sind, und die Scheiben (80,81) außer der letzten Getriebestufe (101) alle anderen Getriebestufen (86,89,92,97) zwischen sich einschließen.

34. Vorrichtung nach einem oder mehreren der Ansprüche 29 bis 33, dadurch gekennzeichnet, daß die dem Antriebsmotor (12) benachbarte Scheibe (80) des Werkzeugträgers (13) am Kragen (79) des Schlittens (14) drehbar gelagert ist.

35. Vorrichtung nach einem oder mehreren der Ansprüche 29 bis 34, dadurch gekennzeichnet, daß die Getriebestufen (86,89,92,98,101) von Riementrieben gebildet sind.

36. Vorrichtung nach einem oder mehreren der Ansprüche 29 bis 35, dadurch gekennzeichnet, daß der Schlitten (14) topfartig gestaltet ist, der an seiner Unterseite von der zweiten, ebenfalls topfartigen und unterseitig offenen Scheibe (81) des Werkzeugträgers (13) unterfaßt ist, wobei die Getriebestufen (86,89,92,98,101) im Hohlraum des Schlittens (14) untergebracht sind.

## FIG. 1

## FIG. 3

## FIG. 2

## FIG. 4

FIG.5

FIG.6

FIG.8

FIG.7

15

FIG. 10

FIG. 9

FIG. 11

FIG. 12

EP 0 473 035 A2

# FIG. 13